# EUROPÄISCHE PATENTSCHRIFT

(11) **EP 0 711 446 B1**
(45) Veröffentlichungstag und Bekanntmachung des Hinweises auf die Patenterteilung: **13.08.1997**
(21) Anmeldenummer: 94918752.0
(22) Anmeldetag: 27.06.1994
(51) Int. Cl.: G11B 27/00, G07F 17/30, G11B 33/10, G11B 27/34

(54) **SYSTEM ZUR TITELANZEIGE VON VIDEO- ODER MUSIKSTÜCKEN**
SYSTEM FOR DISPLAYING THE TITLE OF PIECES OF VIDEO OR MUSIC
SYSTEME D'AFFICHAGE DU TITRE DE MORCEAUX DE VIDEO OU MUSIQUE

(30) Priorität: 26.07.1993 DE 4325035
(43) Veröffentlichungstag der Anmeldung: 15.05.1996
(73) Patentinhaber: NSM AKTIENGESELLSCHAFT, 55411 Bingen (DE)
(72) Erfinder: ZIMMER, Manfred, D-55452 Rümmelsheim (DE)
(74) Vertreter: Becker, Bernd, Dipl.-Ing.
(86) Internationale Anmeldenummer: DE9400748
(87) Internationale Veröffentlichungsnummer: WO9503609

(56) Entgegenhaltungen:
- WO-A-92/07360
- WO-A-93/18465
- GB-A- 2 193 420
- GB-A- 2 240 869
- GB-A- 2 257 284
- GB-A- 2 259 398

## Beschreibung

Die Erfindung betrifft ein System zur Titelanzeige von insbesondere in einem Musikautomaten verfügbaren und auswählbaren Sprach-, Video- und/oder Musikstücken mit graphischer und alphanumerischer Darstellung.

Bei herkömmlichen Musikautomaten sind die auswählbaren Musikstücke auf Anzeigetafeln oder Titelstreifen etc. dargestellt. Dies ist auch bei Musikautomaten zum Abspielen moderner Musikdatenträger, wie CDs, der Fall. Zur schnellen optischen Erfassung durch den Benutzer wird die graphische Darstellung einer CD, insbesondere die Hülle bzw. das Cover der CD, in einem Abschnitt eines Anzeigeelementes dargestellt, wobei in dem anderen Abschnitt ein Papierstreifen mit Titeltexten und Titelnummern vorgesehen ist.

Derartige Titelanzeigen benötigen an einem Musikautomaten verhältnismäßig viel Platz. Auch sind derartige mechanische Anzeigevorrichtungen sehr wartungsaufwendig.

Eine Umbestückung des bekannten Musikautomaten ist ebenfalls sehr arbeitsintensiv und erfordert große Sorgfalt.

Sind Fernwahleinheiten vorgesehen, müssen diese mit redundanten Titelstreifen versehen werden. Auf ein Anzeigen der Hülle bzw. des Covers muß oft verzichtet werden, da nur ein Original pro CD zur Verfügung steht.

Die GB-A-2 240 869, die dem nächstliegenden Stand der Technik enthält, beschreibt einen Musik- oder Videoautomaten, bei dem zur Anzeige der auszuwählenden Titel von Albumhüllen, Covers, etc. abgetastete alphanumerische und/oder graphische Daten angezeigt werden, wie sie gewöhnlich auf den Albumhüllen oder dergleichen verwendet werden. Mittels so abrufbarer Titelanzeigen können Titel einer CD, etc. für das Abspielen ausgewählt werden.

Es ist ferner aus der GB-A-2 259 398 ein Musikwiedergabesystem bekannt, bei dem z.B. Daten betreffend eine graphische Darstellung für Aufzeichnungszwecke, wie eine Albumhülle, digital erfaßt werden und angezeigt werden, um dem Benutzer die Auswahl gespeicherter Musikstücke anhand entsprechender Anzeigen zu erleichtern. Vorzugsweise werden die Albumhülle und die zugehörigen Titelanzeigen gleichzeitig angezeigt, wobei auch jeweils mehrere Albumhüllen gleichzeitig angezeigt werden können.

Es ist die Aufgabe der Erfindung, die Titelanzeige von in einem Musikautomaten verfügbaren und auswählbaren Musikstücken nach benutzer- freundlicher zu gestalten. Diese Aufgabe ist erfindungsgemäß mit einem System mit den Merkmalen des Anspruches 1 gelöst. Vorteilhafte Ausgestaltungen sind Gegenstand der abhängigen Ansprüche.

Eine Speichereinrichtung dient zum Speichern von graphischen und alphanumerischen Daten entsprechend der Titeldarstellung. Diese Daten werden mittels einer Zuordnungseinrichtung einander beliebig zugeordnet und mittels einer Anzeigevorrichtung, insbesondere eines Bildschirms, angezeigt. Dabei können die graphischen und alphanumerischen Daten einzeln, gruppenweise oder über- einandergeblendet angezeigt werden. Es können auch gleichzeitig mehrere Datengruppen angezeigt werden, die jeweils einander zugeordnete alphanumerische und graphische Daten aufweisen.

Die graphischen Daten sind im Computer vorab gespeicherte Graphiken. Sie können jedoch auch computererzeugt sein. Vorzugsweise werden die graphischen Daten nachbearbeitet, wobei z.B. Kontrast und/oder Farbe geändert werden. Es kann auch wahlweise nur ein Bildausschnitt von durch eine Abtasteinrichtung eingelesenen Coverbildern weiterverarbeitet werden.

Die graphischen Daten sind nach Erfassung einem Datenreduktionsverfahren unterzogen worden, so daß ein Minimum an Daten zur Reproduktion des Bildes auf der Anzeigeeinrichtung des Musikautomaten erforderlich ist. Die Datenreduktion wird begrenzt und bestimmt durch den Bildinhalt und die für das reproduzierte Bild erforderliche Qualität.

Die alphanumerischen Daten enthalten eine Information betreffend die Musikstücke wie beispielsweise den Titel, Interpreten, Komponisten etc. Sie können sich jedoch auch auf die Kategorie wie beispielsweise Klassik, Pop, Rock, Jazz oder aber auch eine bestimmte Hitparade beziehen, entsprechend der das Musikstück einzuordnen ist. Diese Daten werden vorzugsweise manuell über eine Eingabeeinrichtung, insbesondere eine Tastatur, eingegeben.

Die zuvor durchgeführte Zuordnung hat beim Anzeigen dahingehend Auswirkungen, daß bei der Datenanzeige zu Musikstücken die Zuordnung des jeweiligen Titels eines Musikstücks zu einer Hülle erkennbar ist. Ein beliebiges Zuordnen ermöglicht eine freie Gestaltung einer neuen Zusammenstellung von Musikstücken zu einem neuen Programm. Es wird sozusagen aus den verschiedenen Musikstücken eine Einheit mit einem eigenen Cover zusammengestellt.

Erfolgt das Bearbeiten und Zusammenstellen von Daten nicht direkt im Musikautomaten, sondern extern, z.B. in einer zentralen Datenverarbeitungseinrichtung, so sind Übertragungsmedien notwendig, um die Daten der Datenverarbeitungseinrichtung zu dem Musikautomaten zu ermöglichen. Solche Übertragungsmedien sind beispielsweise Disketten, Speichermodule, Chipkarten, Datenfernübertragungseinrichtungen mit Modem oder Strichcodestreifen. Dem Strichcodestreifen wird als Übertragungsmedium häufig der Vorzug gegeben, da dieser bei einer hohen Datenreduktion bzw. -kompression es gestattet, die Daten durch einen kompakten mehrstufigen Strichcodestreifen aufzunehmen, der auf einfache Weise durch einen herkömmlichen Drucker reproduzierbar hergestellt und mit geringem Aufwand gelesen werden kann. Außerdem kann dieser einfach und schnell vervielfältigt werden.

An dem Musikautomaten sind für diese Übertragungsmedien entsprechende Übertragungseinrichtungen vorgesehen. Im Fall von Strichcodestreifen ist vorzugsweise ein Scanner oder ein Lichtgriffel als Abtasteinrichtung vorgesehen.

Im Musikautomaten werden die Daten wie folgt aufgerufen und verwendet:
Die Musikdatenträger werden in eine entsprechende Aufnahmeeinrichtung eingesetzt, wobei dieser zugeordnete Nummern über Wahltasten der Eingabeeinrichtung des Musikautomaten eingegeben werden können.

Die alphanumerischen Daten können von den graphischen getrennt gespeichert werden. Erfindungsgemäß werden die alphanumerischen Daten einem bereits im Musikautomaten gespeicherten Cover zugeordnet. Dies ist insbesondere vorteilhaft, da in diesem Fall die zu übertragende Datenmenge wesentlich verringert ist und ein Einlesen der Daten von dem Übertragungsmedium in den Musikautomaten schneller erfolgt.

Nachdem solcherart eine Bestückung des Musikautomaten abgeschlossen ist und die graphischen Daten, alphanumerischen Daten und Musikdatenträger einander zugeordnet sind, können die Daten zur Titelanzeige abgerufen werden.

Eine Auswahl der Musikstücke kann über eine Eingabeeinrichtung wie eine Tastatur des Musikautomaten manuell erfolgen. Es werden alphanumerische Zeichen, d.h. die gewählten Titel oder deren Kennziffern, eingegeben, woraufhin die diesen Titeln entsprechenden alphanumerischen und/oder graphischen Daten aufgerufen und dargestellt werden. Dies erfolgt vorzugsweise auf einer Bildschirmanzeige. Soll die Auswahl automatisch erfolgen, wird durch eine entsprechende Eingabe an der Eingabeeinrichtung ein Programm gestartet, das graphische und/oder alphanumerische Daten von vorhandenen Musikstücken aufeinanderfolgend anzeigt. Für dieses aufeinanderfolgende Anzeigen können zuvor Angaben zur Eingrenzung der auszuwählenden Musikstücke eingegeben werden. Beispielsweise werden durch Eingeben von "Klassik" nur die dieser Musikategorie zugehörigen vorhandenen Musikstücke angezeigt. Die Auswahl kann nach Programmdurchlauf auf die vorstehend beschriebene Weise durch manuelle Eingabe erfolgen. Vorteilhaft können bei der automatischen Auswahl die gewünschten Musikstücke aber auch während des Programmlaufs durch einfaches Betätigen einer speziellen Taste der Eingabeeinrichtung ausgewählt werden.

Beim Abspielen eines ausgewählten Musikstückes werden die diesem Musikstück zugehörigen Daten angezeigt. Diese Anzeige kann aber unterbrochen werden, wenn während des Abspielens eine erneute Auswahl weiterer abzuspielender Musikstücke getroffen werden soll. Dann wird wieder zu der für die Auswahl vorgesehene obige Anzeige umgeschaltet.

Vorteilhaft können an dem Musikautomaten Anschlüsse für Fernwahleinheiten mit gleicher Titelanzeigevorrichtung vorgesehen sein. Über diese Anschlüsse können die graphischen und alphanumerischen Daten für die Titelanzeige automatisch zu Terminals übertragen werden. Damit ist bei einer Installation des Musikautomaten oder bei einer CD-Umbestückung keine weitere Arbeit an Terminals erforderlich. Sie bieten die gleichen Möglichkeiten der Titelanzeige wie der Musikautomat selbst.

Die Erfindung wird im folgenden beispielsweise nun anhand bevorzugter Ausführungsbeispiele unter Bezugnahme auf die Zeichnung weiter erläutert, in der:
- Fig. 1: eine Heimstation zeigt, bei der graphische und alphanumerische Daten eingelesen und vorverarbeitet werden.
- Fig. 2: einen Musikautomaten mit einer Vorrichtung zur Titelanzeige gemäß der Erfindung zeigt; und
- Fig. 3: einen weiteren Musiksautomaten mit einer Vorrichtung zur Titelanzeige gemäß der Erfindung zeigt.

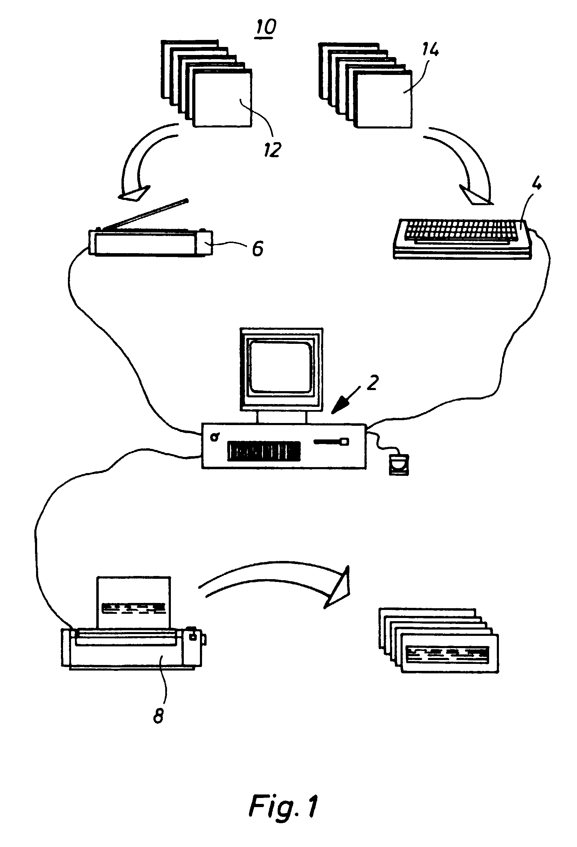

Bei der Anordnung nach Fig. 1 werden Übertragungsmedien eingesetzt, um die vorverarbeiteten Daten zu dem betreffenden Musikautomaten zu übertragen.

Fig. 1 zeigt einen Personalcomputer 2 mit folgenden Peripherieeinheiten: einer Tastatur 4 als Eingabeeinrichtung, einem Scanner 6 als Abtasteinrichtung und einem Drucker 8.

Der Scanner 6 ist dazu vorgesehen, die Deckseiten 12 von Covern 10 bzw. Hüllen von CDs abzutasten. Titel, Interpret etc. werden von der Rückseite 14 des Covers abgelesen und dem Personalcomputer 2 über die Tastatur 4 manuell eingegeben. Im Personalcomputer 2 erfolgt eine Datenreduktion der zu der Deckseite des Covers 10 gehörigen graphischen Daten. Weiterhin erfolgt eine Zuordnung der graphischen und der alphanumerischen Daten, die beliebig vorgenommen werden kann. Es ist auch möglich, alphanumerische Daten ohne graphische Daten vorzusehen oder alphanumerische Daten einer im Computer gespeicherten Computergraphik zuzuordnen. Die einander zugeordneten Daten werden einer Umwandlung in einen Strichcode unterzogen, und der Strichcode wird durch den an den Personalcomputer 2 angeschlossenen Drucker 8 ausgedruckt. Die Daten sind somit auf Strichcodestreifen gespeichert und können übergeben werden.

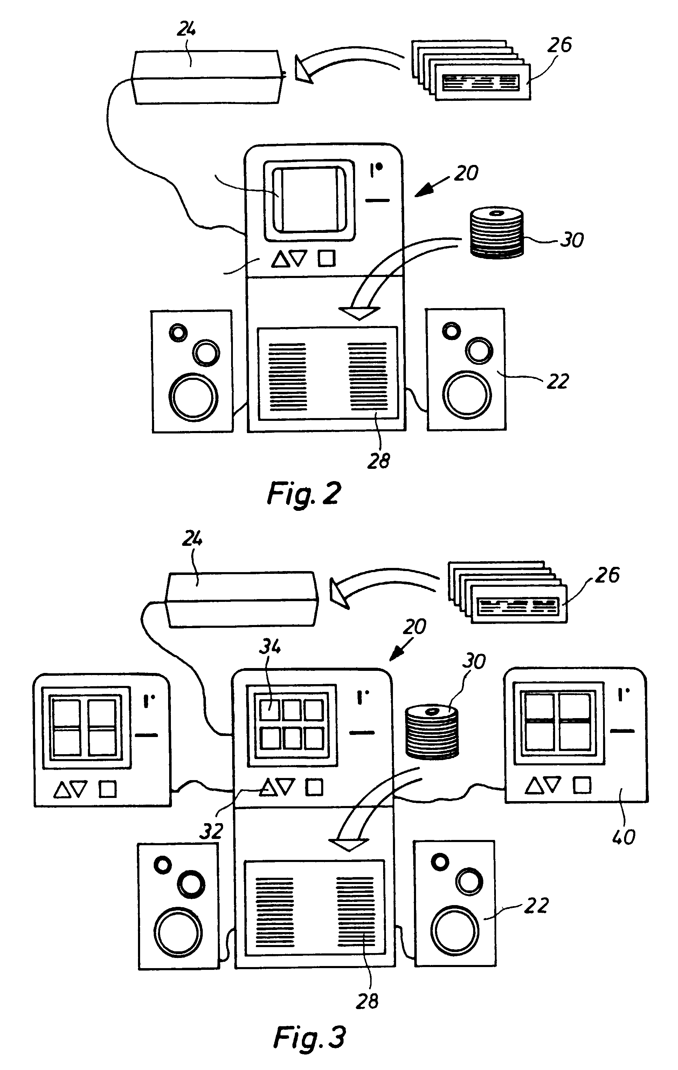

Fig. 2 zeigt einen Musikautomaten 20 mit seitlich angeordneten Lautsprechern 22. Weiterhin ist ein Strichcode-Leser 24 als erste Abtasteinrichtung an den Musikautomaten 20 angeschlossen. Mit diesem Strichcode-Leser 24, der ein Scanner oder ein Lesegriffel sein kann, werden die Strichcodestreifen 26 abgetastet, so daß die gespeicherten graphischen und alphanumerischen Daten in den Musikautomaten 20 eingelesen werden können. Dabei erfolgt die Datenübertragung mit Hilfe eines dafür vorgesehenen Bestückungsprogramms, das am jeweiliegen Musikautomaten aktiviert wird.

Die Zuordnung der so eingelesenen Daten zu den korrespondierenden Nummern von CD-Magazinfächern 28 als Aufnahmeeinrichtungen erfolgt entweder durch Einsetzen der CD 30 an einem vom Bestückungsprogramm automatisch ermittelten und vorgeschlagenen Magazinfach oder durch Eingabe der Magazinfach-Nummer über Wahltasten 32 der Eingabeeinrichtung des Musikautomaten 20.

Die eingelesenen alphanumerischen Daten, die keinen graphischen Daten zugeordnet sind, können beliebigen bereits im Musikautomaten 20 gespeicherten, graphischen Daten zugeordnet werden. Dies ist insbesondere bei Verwendung von Strichcodestreifen als Übertragungsmedien vorteilhaft, weil dabei die zu übertragende Datenmenge wesentlich reduziert ist.

Es ist weiterhin vorgesehen, jeder wählbaren Titel nummer ein beliebiges Musikstück einer beliebigen CD innerhalb des Magazins zuzuordnen, und zwar durch Eingabe der Magazinfach--Nummer und der Nummer des Musikstücks der entsprechenden CD im Magazinfach. Dadurch ist es möglich, dem Benutzer über die Titelanzeige beliebig zusammengestellte Musik-Alben zur Wahl anzubieten. Die Titel dieser "neuen" Musik-Alben können beispielsweise nach Musik-Kategorie, Musikstil, Interpret usw. sortiert sein. Die Anzeige für einen Benutzer kann auf verschiedene wählbare Arten erfolgen. Auf der in Fig. 2 gezeigten Anzeigeeinrichtung ist beispielsweise nur eine graphische Darstellung mit übergeblendeten Titeln zu sehen.

Fig. 3 ist ähnlich Fig. 2. Jedoch weist der Musikautomat zwei periphere Einheiten 40 auf. Die peripheren Einheiten sind als Terminals ausgebildet. Durch sie können, wie am Musikautomaten selbst, Musikstücke ausgewählt werden, die dann von dem Musikautomaten gespielt werden. Auch diese Terminals weisen eine Anzeigeeinrichtung auf.

Auf den in Fig. 3 dargestellten Anzeigeeinrichtungen 34 des Musikautomaten 20 und der Terminals 40 sind auf von Fig. 2 abweichende Anzeigeweise dargestellt. An dem Musikautomaten sind gleichzeitig sechs verschiedene graphische Darstellungen gezeigt, während an den beiden Terminals nur vier Darstellungen gleichzeitig angezeigt werden.

Die beschriebene Einrichtung ermöglicht eine leichte Umbestückung und eine einfache Bedienung von Musikautomaten. Die Möglichkeit der externen Dateneingabe verhindert längere Betriebsunterbrechungen des Musikautomaten nur aufgrund von Dateneingaben.

## Patentansprüche

1. System zur Titelanzeige von mit einer graphischen und/oder alphanumerischen Darstellung gekennzeichneten, auf Wiedergabegeräten (20), insbesondere auf Musikautomaten abzuspielenden Sprach-, Video- und/oder Musikstücken, bei dem
- die einem Stück zugeordnete graphische und/oder alphanumerische Darstellung, vorzugsweise optisch, abgetastet wird und die Abtastdaten in dem Wiedergabegerät gespeichert werden,
- die in dem Wiedergabegerät (20) gespeicherten graphischen und alphanumerischen Abtastdaten aufgerufen und nach Vorgabe einander zugeordnet werden und die einander zugeordneten graphischen und alphanumerischen Daten auf einer Anzeigeeinrichtung (34) angezeigt werden,
dadurch **gekennzeichnet**, daß
- in dem Wiedergabegerät Mittel zur Zusammenstellung von Sprach-, Video- und/oder Musikstücken nach Wahl zu einem Programm vorgesehen sind,
- diesem Programm eine in einem Computer des Wiedergabegerätes (20) gespeicherte Graphik als dem Programm eigene Darstellung zugeordnet werden kann und
- diese Darstellung zwecks Programmauswahl durch den Benutzer auf der Anzeigeeinrichtung (34) anzeigbar ist.

2. System nach Anspruch 1, dadurch **gekennzeichnet**, daß die Anzeigeeinrichtung (34) ein Bildschirm ist.

3. System nach Anspruch 1 oder 2, dadurch **gekennzeichnet**, daß eine Eingabeeinrichtung, vorzugsweise eine Tastatur (4), zur Auswahl von Titeln vorgesehen ist.

4. System nach einem der Ansprüche 1 bis 3 **gekennzeichnet** durch eine Übertragungseinrichtung für Titeldaten, insbesondere Disketten, Speichermodule, Chipkarten, Strichcodes und/oder eine Datenfernübertragung über ein Modem.

5. System nach einem der Ansprüche 1 bis 4, **gekennzeichnet** durch eine Aufnahmeeinrichtung für Musikdatenträger.

6. System nach einem der Ansprüche 1 bis 5, **gekennzeichnet** durch Mittel zur Datenfernübertragung zwischen einem zentralen Speicher für Musiktitel und/oder Musikstücke und einem Musikautomaten (20).

## Claims

1. System for displaying the titles of vocal pieces, video pieces and/or pieces of music, which are featured by a graphic and/or alphanumerical representation and are to be played on playback units (20), more especially on juke boxes, wherein
- the graphic and/or alphanumerical representation associated with a piece is scanned, preferably optically, and the scanning data is stored in the playback unit,
- the graphic and alphanumerical scanning data, stored in the playback unit (20), is recalled and associated with one another according to the guidelines, and the graphic and alphanumerical data associated with one another is displayed on a display device (34),
characterised in that
- means are selectively provided in the playback unit for the compilation of vocal pieces, video pieces and/or pieces of music to form a program,
- graphics, stored in a computer of the playback unit (20), can be associated with this program as a representation peculiar to the program, and
- this representation is displayable on the display device (34) for the user to select a program.

2. System according to claim 1, characterised in that the display device (34) is a display screen.

3. System according to claim 1 or 2, characterised in that an input device, preferably a keyboard (4), is provided for the selection of titles.

4. System according to one of claims 1 to 3, characterised by a transfer device for title data, more especially diskettes, storage modules, chip cards, bar codes and/or a remote data transfer means via a modem.

5. System according to one of claims 1 to 4, characterised by a pick-up device for music data carriers.

6. System according to one of claims 1 to 5, characterised by means for the remote transmission of data between a central storage unit for titles of music and/or pieces of music and a juke box (20).

## Revendications

1. Système d'affichage du titre de morceaux parlés, vidéo et/ou de musique, à lire sur des appareils de lecture (20), en particulier des automates de musique, avec une représentation graphique et/ou alphanumérique, dans lequel
- la représentation graphique et/ou alphanumérique associée à un morceau est analysée, de préférence optiquement, et les données d'analyse sont mémorisées dans l'appareil de lecture,
- les données d'analyse mémorisées dans l'appareil de lecture (20) sont appelées et sont associées les unes aux autres suivant indication et les données graphiques et alphanumériques associées les unes aux autres sont affichées sur un dispositif d'affichage (34),
caractérisé en ce que
- dans l'appareil de lecture sont prévus des moyens pour la compilation de morceaux parlés, vidéo et/ou de musique au choix en un programme,
- à ce programme peut être associé un graphique mémorisé dans un ordinateur de l'appareil de lecture (20) en tant que propre représentation du programme et
- cette représentation peut être affichée sur le dispositif d'affichage (34) en vue de la sélection du programme par l'utilisateur.

2. Système selon la revendication 1, caractérisé en ce que le dispositif d'affichage (34) est un écran.

3. Système selon la revendication 1 ou 2, caractérisé en ce qu'il est prévu un dispositif de saisie, de préférence un clavier (4), pour la sélection de titres.

4. Système selon l'une des revendications 1 à 3, caractérisé par un dispositif de transmission de données de titre, en particulier des disquettes, des modules de mémoire, des cartes à puce, des codes à barres et/ou une télétransmission de données par un modem.

5. Système selon l'une des revendications 1 à 4, caractérisé par un dispositif de réception de supports de données musicales.

6. Système selon l'une des revendications 1 à 5, caractérisé par des moyens pour la télétransmission de données entre une mémoire centrale de titres de musique et/ou de morceaux de musique et un automate de musique (20).
